# EUROPÄISCHE PATENTSCHRIFT

(11) **EP 4 585 463 B1**
(45) Veröffentlichungstag und Bekanntmachung des Hinweises auf die Patenterteilung: **28.01.2026**
(21) Anmeldenummer: 24210171.5
(22) Anmeldetag: 31.10.2024
(51) Int. Cl.: B60N 3/04

(54) **MONOMATERIELLE FUSSMATTENBEFESTIGUNG**
MONO-MATERIAL FOOTREST FASTENING
FIXATION DE PAILLASSON MONOMATEUSE

(30) Priorität: 15.11.2023 DE 102023211369
(43) Veröffentlichungstag der Anmeldung: 16.07.2025
(73) Patentinhaber: Gottlieb Binder GmbH & Co. KG, 71088 Holzgerlingen (DE)
(72) Erfinder: HEEPE, Lars, 72072 Tübingen (DE); POULAKIS, Konstantinos, 71157 Hildrizhausen (DE)
(74) Vertreter: Kohler Schmid Möbus Patentanwälte

(56) Entgegenhaltungen:
- WO-A1-97/06029
- DE-A1- 102007 004 146
- DE-A1- 102013 009 091

## Beschreibung

### Hintergrund der Erfindung

Die Erfindung betrifft eine Fußmattenanordnung für ein Fahrzeug, wobei die Fußmattenanordnung Folgendes aufweist:
- eine Boden-Verkleidung;
- ein erstes Klettelement, das mit der Boden-Verkleidung verbunden ist;
- eine Fußmatte;
- ein zweites Klettelement, das wenigstens teilweise an einer Unterseite der Fußmatte angeordnet ist;
wobei das zweite Klettelement mit dem ersten Klettelement durch eine Klettverbindung verbunden ist. Die Erfindung betrifft ferner ein Fahrzeug mit einer solchen Fußmattenanordnung und ein Verfahren zur Herstellung einer solchen Fußmattenanordnung.

Die DE 10 2013 009 091 A1 offenbart eine Lagesicherung einer Boden-Verkleidung eines Kraftfahrzeugs über Anbringteile der Boden-Verkleidung und Verbindungsteile am Boden des Kraftfahrzeugs. Die Boden-Verkleidung ist bevorzugt als eine Gummimatte oder Textilmatte ausgebildet. Die Verbindungsteile und Anbringteile sind bevorzugt aus einem thermoplastischen Kunststoff gebildet und mit Verhakungselementen ausgestattet, die aus Kunststoffgewebe oder Kunststoffgewirke ausgebildet sind.

Die EP 3 003 675 B1 offenbart ebenfalls Verbindungsteile für Boden-Verkleidungen, wobei die Verbindungsteile aus thermoplastischem Kunststoff bestehen.

Die WO97/06029A1 offenbart eine Fussmattenanordnung bzw. ein Verfahren zur Herstellung einer Fussmattenanordnung gemäss dem Oberbegriff des Anspruchs 1 bzw. des Anspruchs 19.

Die aus dem Stand der Technik bekannten Boden-Verkleidungsanordnungen lassen sich nur unter vergleichsweise hohem Aufwand recyceln.

### Aufgabe der Erfindung

Es ist daher Aufgabe der vorliegenden Erfindung, eine Fußmattenanordnung bereitzustellen, die einfach recycelt werden kann. Es ist weiter Aufgabe der Erfindung, ein Fahrzeug mit einer solchen Fußmattenanordnung bereitzustellen. Außerdem ist es Aufgabe der Erfindung, ein Verfahren zur Herstellung einer solchen Fußmattenanordnung anzugeben.

### Beschreibung der Erfindung

Diese Aufgabe wird erfindungsgemäß durch eine Fußmattenanordnung nach Anspruch 1 gelöst. Ferner wird die Aufgabe durch ein Fahrzeug gemäß Anspruch 18 gelöst. Die Aufgabe wird weiterhin durch ein Verfahren mit den Schritten gemäß Anspruch 19 gelöst.

Die erfindungsgemäße Fußmattenanordnung ist dadurch gekennzeichnet, dass die Boden-Verkleidung, das erste Klettelement, die Fußmatte und das zweite Klettelement aus dem gleichen Monomaterial ausgebildet sind.

Dadurch müssen die verschiedenen Komponenten der Fußmattenanordnung nicht mehr gemäß ihrer stofflichen Zusammensetzung aufgetrennt werden, wenn ein Recycling der Fußmattenanordnung erfolgt. Das Monomaterial der Fußmattenanordnung kann im Rahmen des Recyclings unmittelbar wiederverwertet werden.

Unter dem Begriff Monomaterial wird insbesondere ein Material verstanden, das zu wenigstens 90%, vorzugsweise wenigstens 95%, aus einem einzigen Stoff besteht. Das Monomaterial weist insbesondere zu wenigstens 90%, vorzugsweise wenigstens 95%, besonders bevorzugt zu wenigstens 99%, Polymere der gleichen (Polymer-)Gruppe auf. Bevorzugt ist das Monomaterial zu wenigstens 90%, vorzugsweise wenigstens 95%, besonders bevorzugt zu wenigstens 99%, aus Polymeren der gleichen (Polymer-)Gruppe ausgebildet.

Die Verbindung zwischen der Boden-Verkleidung und dem ersten Klettelement erfolgt insbesondere durch einen Formschluss, Materialschluss und/oder Kraftschluss.

Bevorzugt ist eine Ausführungsform der Fußmattenanordnung, bei der das Monomaterial als ein Polyester, insbesondere ein Polylactid, ein Polypropylen oder als ein Polyamid ausgebildet ist. Insbesondere sind die Polymere, welche das Monomaterial zu wenigstens 90%, vorzugsweise wenigstens 95%, besonders bevorzugt zu wenigstens 99%, aufweist, aus der Gruppe der Polyester, insbesondere der Polylactide, der Polyolefine und/oder der Polyamide ausgewählt. Polyester lassen sich chemisch und/oder mechanisch besonders effizient recyceln.

Von Vorteil ist eine Ausführungsform der Fußmattenanordnung, bei der das erste Klettelement eine Basisplatte aufweist, wobei eine Konterplatte der Fußmattenanordnung wenigstens teilweise an der Boden-Verkleidung angeordnet ist, wobei ein Verbindungssystem die Basisplatte und die Konterplatte miteinander verbindet, wobei das Verbindungssystem eine elastische Verbindungseinrichtung aufweist, wobei sich die Verbindungseinrichtung zwischen einander zugewandten, insbesondere parallel zueinander verlaufenden, Seiten der Basisplatte und der Konterplatte erstreckt.

Insbesondere ist die Verbindungseinrichtung an einer Seite der Basisplatte und einer Seite der Konterplatte ausgebildet, wobei diese Seiten einander zugewandt sind und sich entlang einer Verbindungssystemachse senkrecht durch diese Seiten einander gegenüberliegen.

Durch die Anordnung der Verbindungseinrichtung zwischen der Basisplatte und der Konterplatte ist die Fußmattenanordnung raumsparend ausgebildet, wobei die elastische Verbindungseinrichtung durch ihre flexible Ausgestaltung den Ein- und Ausbau der Fußmatte erleichtert.

Die Seiten der Basisplatte und der Konterplatte, zwischen denen die Verbindungseinrichtung ausgebildet ist, verlaufen insbesondere parallel oder in einem spitzen Winkel zueinander.

Mit dem Begriff "Seite" ist insbesondere eine Seitenfläche gemeint. Mit dem Ausdruck "wenigstens teilweise" ist insbesondere "teilweise oder vollständig" gemeint.

Die Basisplatte und die Konterplatte können durch ein Hindurchführen des Verbindungssystems durch die Durchgriffsöffnung und ein Anlegen an die Boden-Verkleidung raum- und materialsparend an der Boden-Verkleidung befestigt werden. Durch das Verbinden der Basisplatte an der Boden-Verkleidung mit Hilfe der Konterplatte sind vorzugsweise keine Ausnehmungen oder Vorsprünge des Bodens eines Kraftfahrzeugs zur Befestigung notwendig, um die Fußmatte fest mit dem Boden zu verbinden. Dadurch kann die Fußmattenanordnung flach ausgebildet werden, sodass der Bauraum, den die Fußmattenanordnung benötigt, gering ist.

Die elastische Verbindungseinrichtung ermöglicht dabei ein einfaches Verbinden der Basisplatte und der Konterplatte aneinander und/oder ein Anpressen an die Boden-Verkleidung, um die Verbindung der vorgenannten Platten mit der Boden-Verkleidung stabiler auszugestalten.

Nach dem Fixieren der Basisplatte an der Konterplatte erfolgt in einfacher Weise eine Befestigung der Fußmatte durch Verbinden des ersten Klettelements, das die Basisplatte aufweist, mit dem zweiten Klettelement, das an der Fußmatte angeordnet ist. Dabei ist das zweite Klettelement bevorzugt fest mit der Fußmatte verbunden. Die Fußmattenanordnung kann somit vorteilhaft raumsparend und zeitsparend montiert werden.

Die elastische Verbindungseinrichtung weist ein elastisches Bauteil oder mehrere elastische Bauteile auf, die zur Verbindung der Konterplatte und Basisplatte verwendet werden, etwa einen elastischen Verbindungssteg. Die elastische Verbindungseinrichtung weist vorzugsweise ein Polymer mit thermoplastischen und/oder elastischen Eigenschaften auf. Insbesondere ist das Polymer in Form eines thermoplastischen Polymers ausgebildet. Die elastische Verbindungseinrichtung weist typischerweise ein Polymer aus der Gruppe der Polyester, Polyamide und/oder Propylene als Material auf. Bevorzugt weist das Verbindungssystem das Polymer auf, welches die Verbindungseinrichtung aufweist. Typische Werte des Elastizitätsmoduls der elastischen Verbindungseinrichtung liegen im Bereich von 1000 N/mm² bis 5000 N/mm², insbesondere von 1300 N/mm² bis 2500 N/mm². Insbesondere weist das elastische Bauteil eines der vorgenannten Materialien und/oder Elastizitätsmodule auf. Die elastische Verbindungseinrichtung kann eine Verjüngung aufweisen, insbesondere in Abschnitten, die die Durchgriffsöffnung durchgreifen.

Das Verbindungssystem weist die elastische Verbindungseinrichtung auf und kann darüber hinaus noch weitere elastische und/oder nicht elastische Bauteile aufweisen, die zur Verbindung der Konterplatte und Basisplatte verwendet werden. Das elastische Bauteil der elastischen Verbindungseinrichtung kann bei einer Verbindung mit anderen Bauteilen des Verbindungssystems eine erheblich geringere elastische Verformbarkeit aufweisen als in einem von dem restlichen Verbindungssystem losgelösten Zustand.

Die Konterplatte, die Basisplatte und die elastische Verbindungseinrichtung, insbesondere in Form eines Verbindungsstegs, können bei einigen Ausführungsformen U-förmig angeordnet oder ausgebildet sein.

Bei einer Weiterentwicklung der vorgenannten Ausführungsform weist die Basisplatte ein erstes Rastelement mit einem ersten Rastabschnitt auf und die Konterplatte ein zweites Rastelement mit einem zweiten Rastabschnitt, wobei die elastische Verbindungseinrichtung wenigstens eines der Rastelemente aufweist, wobei der Rastabschnitt des Rastelements der elastischen Verbindungseinrichtung elastisch verschwenkbar und/oder verformbar ist, wobei das erste Rastelement und das zweite Rastelement unter Anlage des ersten Rastabschnitts an dem zweiten Rastabschnitt miteinander verrastet sind.

Der Einbau der Fußmatte an dem zweiten Klettelement erfolgt vorteilhaft durch ein Verbinden des ersten Klettelements mit dem zweiten Klettelement und ein einfaches Verrasten des ersten Klettelements an der Konterplatte. Umgekehrt kann der Ausbau der Fußmatte durch ein Lösen dieser Rastverbindung und ein Lösen der Klettverbindung zerstörungsfrei erfolgen, ohne dass dafür eine stoffschlüssige Verbindung, etwa eine Klebeverbindung, unter vergleichsweise hohem Zeitaufwand gelöst werden muss.

Die hier verwendeten Lagebezeichnungen "oben", "unten", "Oberseite", "Unterseite" und dergleichen beziehen sich auf den montierten Zustand der Fußmattenanordnung in einem Fahrzeug.

Vorteilhaft ist eine Ausführungsform der Fußmattenanordnung, bei der das erste Rastelement zusammen mit der Basisplatte des ersten Klettelements und/oder das zweite Rastelement zusammen mit der Konterplatte ein Extrusionsprofil mit dem jeweiligen Rastabschnitt aufweist, insbesondere in Form eines Extrusionsprofils ausgebildet ist. Dadurch können die Rastelemente besonders kostengünstig und zeitsparend hergestellt werden. Unter einem Extrusionsprofil wird insbesondere ein Bauteil mit gleichbleibendem Querschnitt verstanden. Die Basisplatte kann aus dem ersten Monomaterial ausgebildet sein.

Das erste Klettelement kann pilzförmige Vorsprünge aufweisen, die in pilzförmige Vorsprünge des zweiten Klettelements eingreifen. Alternativ oder zusätzlich dazu kann das erste Klettelement Haken und das zweite Klettelement Schlaufen aufweisen. Vorzugsweise weist das erste Klettelement Schlaufen und das zweite Klettelement Haken auf, sodass die Boden-Verkleidung mit dem ersten Klettelement ein optisch einheitliches Erscheinungsbild aufweist, wenn die Fußmatte entnommen ist.

Die pilzförmigen Vorsprünge, die Haken und/oder die Schlaufen können Teil eines Bandes sein. Die Schlaufen können an einem Schlaufenband und/oder die Haken können an einem Hakenband vorgesehen sein. Insbesondere können die Schlaufen an einem Schlaufenband ausgebildet sein und/oder die Haken können an einem Hakenband ausgebildet sein. Das jeweilige Band ist vorzugsweise auf ein Extrusionsprofil oder die Fußmatte aufgeklebt und/oder aufgeschweißt.

Bevorzugt ist eine Ausführungsform der Fußmattenanordnung, bei der das erste Rastelement von einer Oberfläche des ersten Klettelements in Richtung der Konterplatte absteht und/oder das zweite Rastelement von einer Oberfläche der Konterplatte in Richtung des ersten Klettelements absteht. Dies bewirkt eine kompakte Ausgestaltung der Rastverbindung von erstem und zweitem Rastelement.

Bei einer vorteilhaften Ausführungsform der Fußmattenanordnung weist das erste Rastelement und/oder das zweite Rastelement einen Rastarm auf, wobei der jeweilige Rastarm einen Stamm aufweist, von dem der jeweilige Rastabschnitt absteht. Durch einen Rastarm mit dem Rastabschnitt kann die elastische Auslenkbarkeit und/oder Verformbarkeit des Rastabschnitts besonders einfach bewirkt werden.

Bei einer Weiterbildung der vorgenannten Ausführungsform der Fußmattenanordnung weist das jeweilige Rastelement mehrere Rastarme auf, insbesondere zwei Rastarme. Da bei dieser Weiterbildung mehrere Rastarme Kräften auf die Fußmatte entgegenwirken, können die einzelnen Rastarme ein geringeres Belastungsvermögen aufweisen als bei der Verwendung nur eines Rastarms des jeweiligen Rastelements. Daher können die Rastarme zum Beispiel mit einer geringeren Materialdicke ausgebildet sein. Dadurch können die Rastarme und damit die Fußmattenanordnung bei hoher Stabilität besonders flach ausgestaltet werden.

Bei einer weiteren Ausführungsform der Fußmattenanordnung verläuft der Rastabschnitt des ersten Rastelementes parallel zu einer Seitenfläche des ersten Klettelements und/oder der Rastabschnitt des zweiten Rastelements parallel zu einer Seitenfläche der Konterplatte, wobei der Rastarm von der jeweiligen Seitenfläche absteht. Dadurch wird eine stabile Rastverbindung bewirkt, wenn die Rastarme ineinandergreifen und die Rastabschnitte aneinander anliegen.

Vorteilhaft ist eine Ausführungsform der Fußmattenanordnung, bei der an dem jeweiligen Rastarm mehrere, insbesondere einander gegenüberliegende, Rastabschnitte ausgebildet sind. Dies erhöht die Flexibilität bei der Auswahl der Rastabschnitte, welche miteinander verrastet werden.

Bevorzugt ist eine Ausführungsform der Fußmattenanordnung, bei der:
- die Boden-Verkleidung eine Durchgriffsöffnung aufweist;
- die Basisplatte wenigstens teilweise an einer Oberseite der Boden-Verkleidung angeordnet ist;
- die Konterplatte wenigstens teilweise an einer Unterseite der Boden-Verkleidung angeordnet ist, die der Oberseite der Boden-Verkleidung gegenüberliegt;
- das zweite Klettelement wenigstens teilweise an einer Unterseite der Fußmatte angeordnet ist;
wobei das Verbindungssystem die Durchgriffsöffnung durchgreift.

Die Basisplatte und die Konterplatte können durch ein Hindurchführen des Verbindungssystems durch die Durchgriffsöffnung und ein Anlegen an die Boden-Verkleidung raum- und materialsparend an der Boden-Verkleidung befestigt werden. Durch das Verbinden der Basisplatte an der Boden-Verkleidung mit Hilfe der Konterplatte sind vorzugsweise keine Ausnehmungen oder Vorsprünge des Bodens eines Kraftfahrzeugs zur Befestigung notwendig, um die Fußmatte fest mit dem Boden zu verbinden. Dadurch kann die Fußmattenanordnung flach ausgebildet werden, sodass der Bauraum, den die Fußmattenanordnung benötigt, gering ist.

Die elastische Verbindungseinrichtung ermöglicht dabei ein einfaches Verbinden der Basisplatte und der Konterplatte aneinander und/oder ein Anpressen an die Boden-Verkleidung, um die Verbindung der vorgenannten Platten mit der Boden-Verkleidung stabiler auszugestalten.

Nach dem Fixieren der Basisplatte an der Konterplatte erfolgt in einfacher Weise eine Befestigung der Fußmatte durch Verbinden des ersten Klettelements, das die Basisplatte aufweist, mit dem zweiten Klettelement, das an der Fußmatte angeordnet ist. Dabei ist das zweite Klettelement bevorzugt fest mit der Fußmatte verbunden. Die Fußmattenanordnung kann somit vorteilhaft raumsparend und zeitsparend montiert werden.

Bei einer Weiterbildung der vorgenannten Ausführungsform der Fußmattenanordnung ist das wenigstes eine Rastelement der elastischen Verbindungseinrichtung in die Durchgriffsöffnung eingeführt.

Dadurch können die Rastelemente besonders raumsparend verbunden werden.

Von Vorteil ist eine Ausführungsform der Fußmattenanordnung, bei der die Konterplatte wenigstens teilweise an der Oberseite der Boden-Verkleidung stoffschlüssig befestigt ist, insbesondere durch Klebstoff oder eine Schweißverbindung.

Dadurch ist die Konterplatte besonders stabil an der Boden-Verkleidung montiert.

Bei einer Weiterbildung der vorgenannten Ausführungsform ist die Verbindungseinrichtung wenigstens teilweise zwischen der Oberseite der Boden-Verkleidung und der Unterseite der Fußmatte ausgebildet.

Dadurch ist die Verbindungseinrichtung vergleichsweise leicht zugänglich.

Bevorzugt ist eine Ausführungsform der Fußmattenanordnung, bei der die elastische Verbindungseinrichtung ein elastisches Filmscharnier aufweist, wobei das elastische Filmscharnier insbesondere die Konterplatte und die Basisplatte miteinander verbindet. Dadurch sind das erste Klettelement und die Konterplatte stabil miteinander verbunden, können aber flexibel gegeneinander ausgerichtet werden, um die Handhabung des ersten Klettelements und der Konterplatte zu erleichtern. Das Filmscharnier ist bevorzugt aus dem Monomaterial ausgebildet.

Bei einer vorteilhaften Ausführungsform der Fußmattenanordnung weist die Konterplatte und/oder das erste Klettelement einen Stützvorsprung auf, der von der jeweiligen Oberfläche der Konterplatte oder des ersten Klettelements absteht. Der Stützvorsprung dient insbesondere dazu, das erste Klettelement und die Konterplatte gegeneinander abzustützen. Dadurch sind die Stabilität der Lage und Form des ersten Klettelements und der Konterplatte in der Fußmattenanordnung besser gewährleistet. Der Stützvorsprung ist bevorzugt aus dem Monomaterial ausgebildet.

Eine bevorzugte Ausführungsform der Fußmattenanordnung zeichnet sich dadurch aus, dass die Konterplatte mit einem Lärmschutz ausgebildet ist. Dadurch wird ein von der Konterplatte erzeugter Lärm unterdrückt. Der Lärmschutz kann in Form eines Klotzes, mehrerer Klötze und/oder einer Beschichtung vorliegen. Der Lärmschutz kann ein weiches und/oder akustisch dämpfendes Material aufweisen.

Ein erfindungsgemäßes Fahrzeug weist eine vorgenannte Fußmattenanordnung auf. Bei einem solchen Fahrzeug kann die Fußmattenanordnung besonders einfach recycelt werden.

Ein erfindungsgemäßes Verfahren zur Herstellung einer Fußmattenanordnung für ein Fahrzeug, bei dem die Fußmattenanordnung Folgendes aufweist:
- eine Boden-Verkleidung;
- ein erstes Klettelement, das mit der Boden-Verkleidung verbunden ist;
- eine Fußmatte;
- ein zweites Klettelement, das wenigstens teilweise an einer Unterseite der Fußmatte angeordnet ist;

wobei das zweite Klettelement mit dem ersten Klettelement durch eine Klettverbindung verbindbar ist,
wobei die Boden-Verkleidung, das erste Klettelement, die Fußmatte und das zweite Klettelement aus dem gleichen Monomaterial ausgebildet sind,
weist den nachfolgenden Schritt auf:
   Verbinden des ersten Klettelements und des zweiten Klettelements.

Eine durch ein solches Verfahren hergestellte Fußmattenanordnung kann einfach recycelt werden.

Weitere Vorteile der Erfindung ergeben sich aus der Beschreibung und der Zeichnung. Ebenso können die vorstehend genannten und die noch weiter ausgeführten Merkmale jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

- Fig. 1a: zeigt schematisch eine Schnittansicht durch eine Fußmattenanordnung in einer ersten Ausführungsform, wobei Klettelemente der Fußmattenanordnung getrennt sind.
- Fig. 1b: zeigt schematisch die Schnittansicht durch die Fußmattenanordnung aus Fig. 1a, wobei die Klettelemente der Fußmattenanordnung verbunden sind.
- Fig. 2a: zeigt schematisch eine Schnittansicht durch eine Boden-Verkleidung und eine Konterplatte einer Fußmattenanordnung in einer zweiten Ausführungsform.
- Fig. 2b: zeigt schematisch eine Draufsicht auf die Boden-Verkleidung und die Konterplatte aus Fig. 2a.
- Fig. 2c: zeigt schematisch eine Schnittansicht durch die Konterplatte, die Boden-Verkleidung und ein erstes Klettelement der Fußmattenanordnung in der zweiten Ausführungsform.
- Fig. 2d: zeigt schematisch eine Schnittansicht durch die Boden-Verkleidung und die mit dem ersten Klettelement verbundene Konterplatte gemäß der zweiten Ausführungsform.
- Fig. 2e: zeigt schematisch eine Schnittansicht durch die Fußmattenanordnung gemäß der zweiten Ausführungsform vor der Anbindung einer Fußmatte.
- Fig. 2f: zeigt schematisch eine Schnittansicht durch die Fußmattenanordnung aus Fig. 2e im angebundenen Zustand der Fußmatte.
- Fig. 3: zeigt schematisch eine Schnittansicht durch eine dritte Ausführungsform einer Fußmattenanordnung mit einem Stützvorsprung.
- Fig. 4: zeigt schematisch eine Schnittansicht durch eine vierte Ausführungsform einer Fußmattenanordnung mit einem Filmscharnier.
- Fig. 5a: zeigt schematisch eine Schnittansicht durch eine weitere Anordnung eines ersten Klettelements, einer Konterplatte und einer Boden-Verkleidung;
- Fig. 5b: zeigt schematisch eine Schnittansicht durch eine fünfte Ausführungsform einer Fußmattenanordnung, wobei Klettelemente der Fußmattenanordnung getrennt sind.
- Fig. 5c: zeigt schematisch die Schnittansicht durch die Fußmattenanordnung aus Fig. 5b, wobei die Klettelemente der Fußmattenanordnung verbunden sind.
- Fig. 6: zeigt schematisch eine Seitenansicht eines Fahrzeugs mit einer erfindungsgemäßen Fußmattenanordnung.

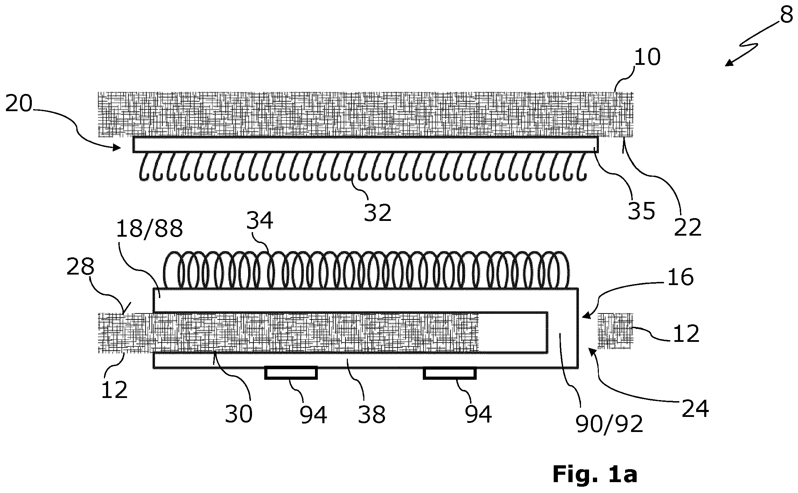

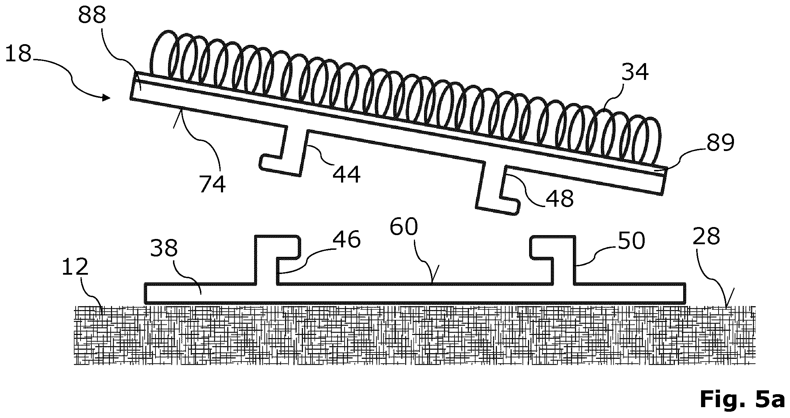

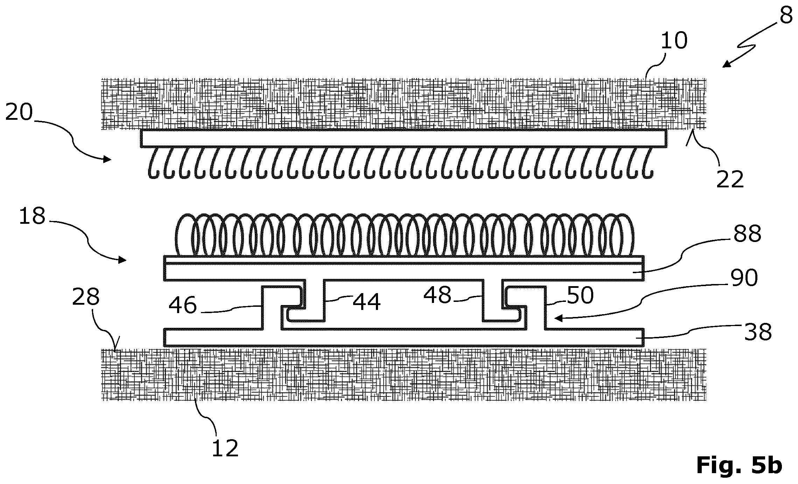

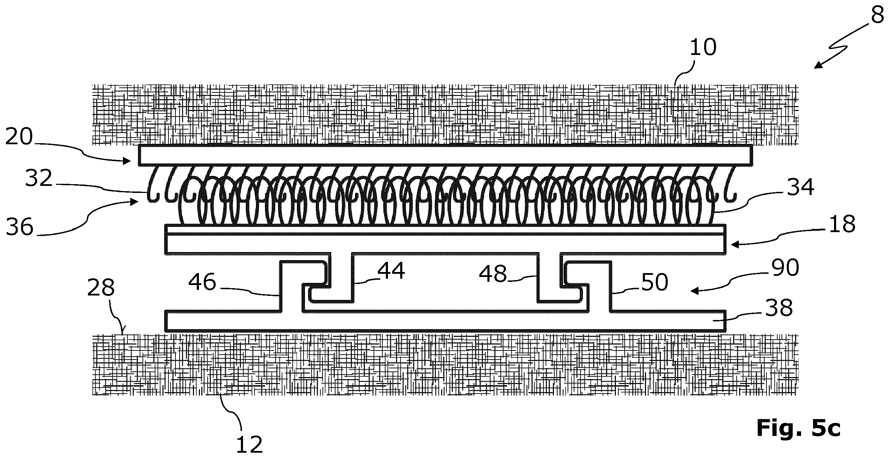

**Fig. 1a** zeigt schematisch eine Schnittansicht durch eine erste Ausführungsform einer Fußmattenanordnung **8.** Die Fußmattenanordnung 8 weist eine Fußmatte **10** und eine Boden-Verkleidung **12** auf, wobei die Boden-Verkleidung 12 an einem Boden eines Fahrzeugs **14** (siehe Fig. 5) befestigt ist. Die Fußmattenanordnung 8 weist ein erstes Klettelement **18** an der Boden-Verkleidung 12 auf, wobei das erste Klettelement 18 mit einer Basisplatte **88** wenigstens teilweise an einer Oberseite **28** der Boden-Verkleidung 12 angeordnet ist. Ferner weist die Fußmattenanordnung 8 ein zweites Klettelement **20** an der Unterseite **22** der Fußmatte 10 auf. Das zweite Klettelement 20 ist an der Unterseite 22 der Fußmatte 10 befestigt, insbesondere angeklebt oder angeschweißt.

Eine Konterplatte **38** ist an einer Unterseite **30** der Boden-Verkleidung 12 angeordnet. Ein Verbindungssystem **16** verbindet die Basisplatte 88 und die Konterplatte 38. Das Verbindungssystem 16 weist eine elastische Verbindungseinrichtung **90** auf. In der gezeigten Ausführungsform ist die elastische Verbindungseinrichtung 90 in Form eines elastischen Verbindungsstegs **92** ausgebildet, der sich durch eine Durchgriffsöffnung **24** der Boden-Verkleidung 12 hindurcherstreckt. Auf diese Weise ist das erste Klettelement 18 fest in der Boden-Verkleidung 12 verankert. An der Konterplatte 38 kann sich ein Lärmschutz **94** befinden.

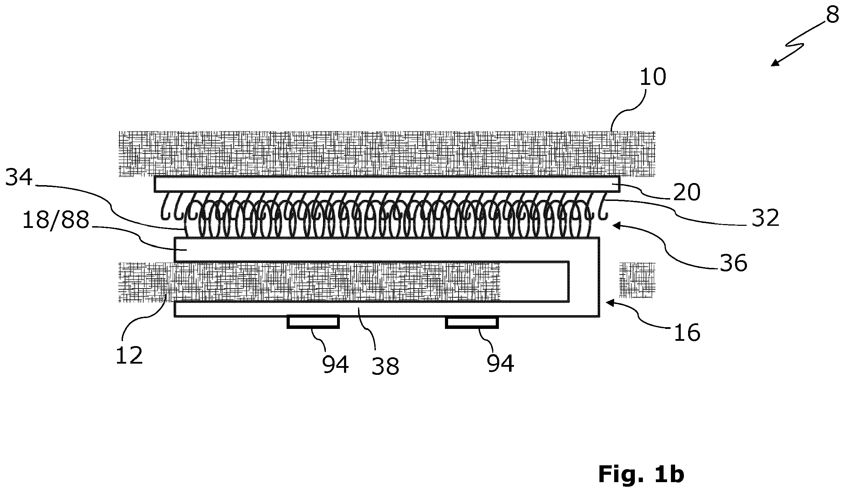

Das erste Klettelement 18 ist derart komplementär zu dem zweiten Klettelement 20 strukturiert, dass das erste Klettelement 18 und das zweite Klettelement 20 eine Klettverbindung **36** (siehe Fig. 1b) ausbilden können, um die Fußmatte 10 fest mit der Boden-Verkleidung 12 zu verbinden. In der gezeigten Ausführungsform der Klettelemente 18, 20 weist das zweite Klettelement 20 Haken **32** und das erste Klettelement 18 mit den Haken 32 korrespondierende Schlaufen **34** auf, wodurch die Klettverbindung 36 des ersten Klettelements 18 und des zweiten Klettelements 20 ermöglicht wird. In anderen Ausführungsformen können das erste Klettelement 18 die Haken 32 und das zweite Klettelement 20 die Schlaufen 34 aufweisen. Die Haken 32 können Teil eines Hakenbandes **35** sein.

Die Boden-Verkleidung 12, das erste Klettelement 18, die Fußmatte 10 und das zweite Klettelement 20 sind aus dem gleichen Monomaterial ausgebildet. Das Monomaterial ist bevorzugt ein Polyester, insbesondere ein Polylactid, ein Polypropylen oder ein Polyamid.

**Fig. 1b** zeigt schematisch eine Schnittansicht durch die Fußmattenanordnung 8 mit der Fußmatte 10 und der Boden-Verkleidung 12, wobei die Konterplatte 38 durch das Verbindungssystem 16 an der Basisplatte 88 befestigt ist. Die Klettelemente 18, 20 der Fußmattenanordnung 8 bilden die Klettverbindung 36 aus, indem die Haken 32 des zweiten Klettelements 20 in die Schlaufen 34 des ersten Klettelements 18 eingreifen.

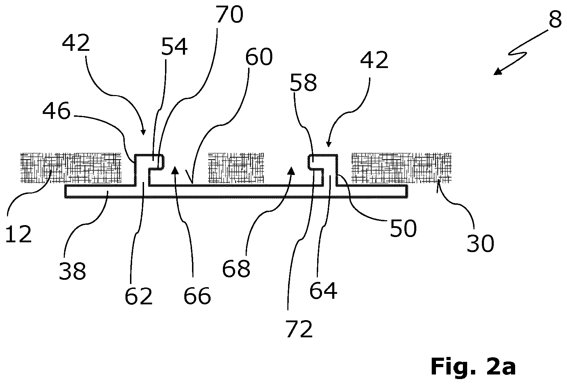

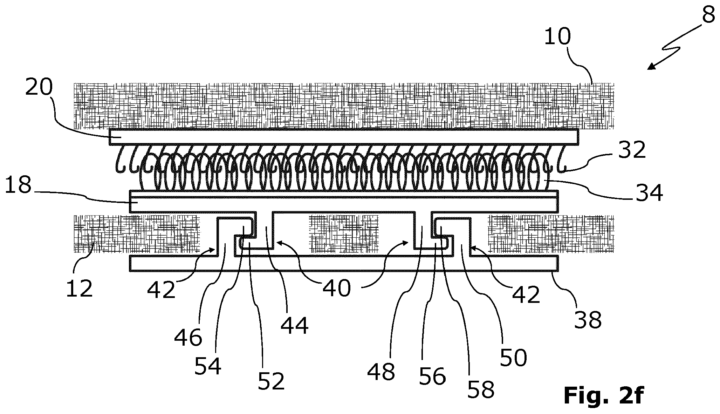

Wie nachfolgend anhand der Fign. 2a bis 2f genauer erläutert wird, kann die Fußmattenanordnung 8 in einigen Ausführungsformen ein erstes Rastelement **40** und ein zweites Rastelement **42** aufweisen, insbesondere mit einem ersten, zweiten, dritten und vierten Rastarm **44, 46, 48, 50** auf (siehe Fig. 2f). An den Rastarmen 44, 46, 48, 50 können ein erster, zweiter, dritter und vierter Rastabschnitt **52, 54, 56, 58** ausgebildet sein.

**Fig. 2a** zeigt schematisch eine Schnittansicht durch einen unteren Teil einer Fußmattenanordnung 8 in einer zweiten Ausführungsform. Die Unterseite 30 der Boden-Verkleidung 12 berührt die Konterplatte 38, wobei sich die Konterplatte 38 an der Unterseite 30 der Boden-Verkleidung 12 entlang erstreckt. Auf der Oberseite **60** der Konterplatte 38 ist das zweite Rastelement 42 angeordnet, wobei das zweite Rastelement 42 mit dem zweiten und vierten Rastarm 46, 50 ausgebildet ist, die von der Oberseite 60 der Konterplatte 38 abstehen. Von einem Stamm **62, 64** des jeweiligen Rastarms 46, 50 stehen der zweite und vierte Rastabschnitt 54, 58, insbesondere senkrecht, ab. Die Rastabschnitte 54, 58 dienen der Verrastung des jeweiligen Rastarms 46, 50. Die Rastarme 46, 50 sind durch die Rastabschnitte 54, 58 hakenförmig ausgestaltet und greifen in jeweils eine Durchgriffsöffnung **66, 68** der Boden-Verkleidung 12 ein.

Die Rastabschnitte 54, 58 verlaufen vorzugsweise parallel zu der Oberseite 60 der Konterplatte 38. Insbesondere sind Kanten **70, 72** der Rastabschnitte 54, 58, die von dem jeweiligen Stamm 62, 64 abstehen und zu einem äußeren Ende des betreffenden Rastabschnitts 54, 58 verlaufen, parallel zu der Oberseite 60 der Konterplatte 38 ausgerichtet. Die Rastabschnitte 54, 58 an den Rastarmen 46, 50 sind elastisch verschwenkbar und/oder verformbar ausgestaltet.

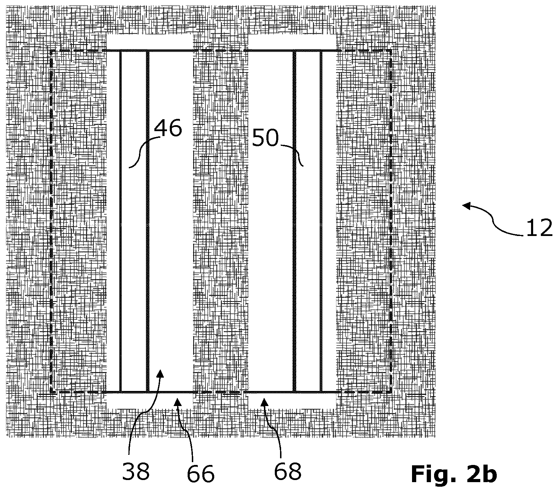

**Fig. 2b** zeigt schematisch eine Draufsicht auf die Boden-Verkleidung 12 und die zugehörige Konterplatte 38. Bereiche der Konterplatte 38, die von der Boden-Verkleidung 12 überdeckt werden, sind dabei durch gestrichelte Linien angedeutet. Dargestellt sind ebenfalls die Rastarme 46, 50, welche die Durchgriffsöffnungen 66, 68 der Boden-Verkleidung 12 durchgreifen.

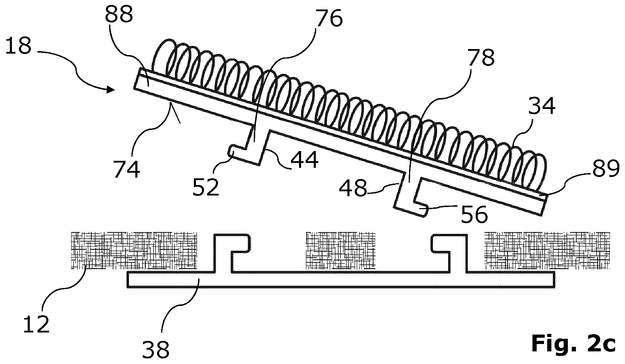

**Fig. 2c** zeigt schematisch eine Schnittansicht durch eine Ausführungsform des ersten Klettelements 18, das an die Konterplatte 38 und die Boden-Verkleidung 12 (vgl. Fig. 2a) herangeführt wird, um mit der Konterplatte 38 verrastet zu werden. Von der Unterseite 74 einer Basisplatte **88** des ersten Klettelements 18 stehen der erste und dritte Rastarm 44, 48, insbesondere senkrecht, ab. Der erste und dritte Rastabschnitt 52, 56 ragen aus dem Stamm **76, 78** des jeweiligen Rastarms 44, 48, wobei die Rastabschnitte 52, 56 insbesondere senkrecht zu dem betreffenden Stamm 76, 78 ausgerichtet sind. Die Rastarme 44, 48 sind dadurch hakenförmig ausgebildet. Die Rastabschnitte 52, 56 verlaufen insbesondere parallel zu der Unterseite 74 des ersten Klettelements 18. An der Basisplatte 88 ist vorzugsweise ein Schlaufenband **89** mit den Schlaufen 34 des ersten Klettelements 18 angeklebt und/oder angeschweißt.

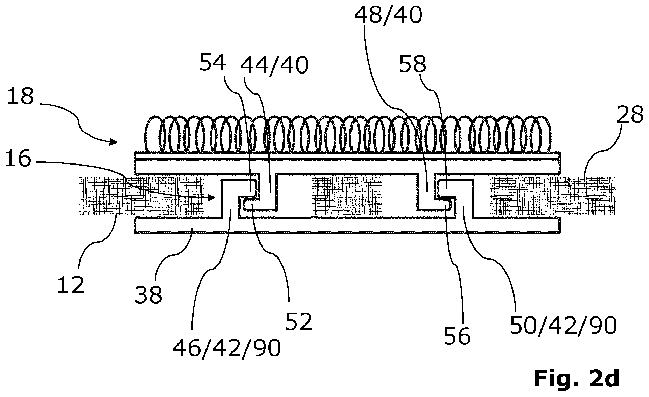

**Fig. 2d** zeigt schematisch eine Schnittansicht durch die vorgenannte Ausführungsform des ersten Klettelements 18, das an der Konterplatte 38 befestigt ist und an der Oberseite 28 der Boden-Verkleidung 12 anliegt. Die Rastabschnitte 52, 54 des ersten und zweiten Rastarms 44, 46 sowie die Rastabschnitte 56, 58 des dritten und vierten Rastarms 48, 50 liegen aneinander an, wobei die Rastarme 44, 46, 48, 50 derart ineinandergreifen, dass sie miteinander verrastet sind. Von den Rastabschnitten 52, 54, 56, 58 an den Rastarmen 44, 46, 48, 50, die miteinander verrastet sind, ist vorzugsweise jeweils wenigstens einer elastisch verschwenkbar und/oder verformbar. Dies ermöglicht die Verrastung der Rastarme 44, 46, 48, 50.

Beispielhaft sind in der gezeigten Ausführungsform die Rastabschnitte 54, 58 der Rastarme 46, 50 elastisch ausgebildet. Die elastische Verbindungseinrichtung 90 des Verbindungssystems 16 weist dann die Rastarme 46, 50 mit den elastischen Rastabschnitten 54, 58 auf.

Die Rastarme 44, 46, 48, 50, und damit die Rastelemente 40, 42, sind bevorzugt als Extrusionsprofil oder als Teil eines Extrusionsprofils ausgebildet.

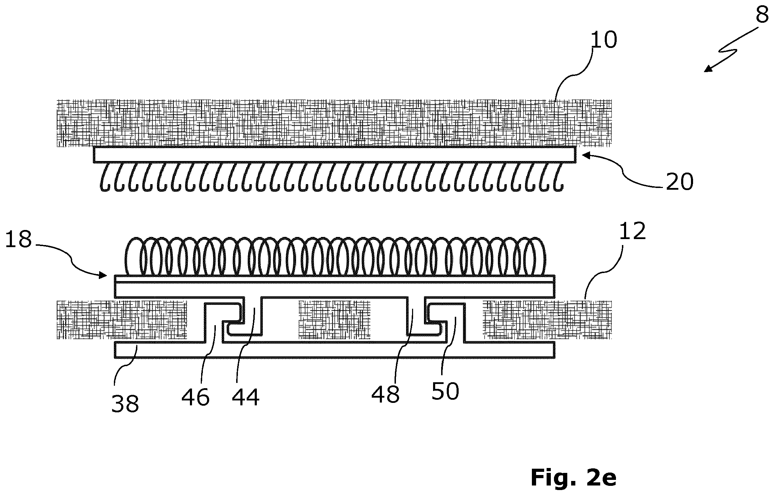

**Fig. 2e** zeigt schematisch eine Schnittansicht durch eine erfindungsgemäße Ausführungsform der Fußmattenanordnung 8. Die Fußmattenanordnung 8 weist die Fußmatte 10, die Boden-Verkleidung 12, das erste Klettelement 18 und das zweite Klettelement 20 sowie die Konterplatte 38 auf, wobei die Konterplatte 38 durch die Rastarme 44, 46, 48, 50 an dem ersten Klettelement 18 befestigt ist.

Das erste Klettelement 18 ist in dem in Fig. 2e gezeigten Zustand der Fußmattenanordnung 8 von dem zweiten Klettelement 20 getrennt. Das erste Klettelement 18 wird an das zweite Klettelement 20 herangeführt, um die beiden Klettelemente 18, 20 fest miteinander zu verbinden und die Fußmatte 10 an der Boden-Verkleidung 12 zu befestigen.

**Fig. 2f** zeigt schematisch eine Schnittansicht durch eine zusammengeführte Ausführungsform der Fußmattenanordnung 8. Die Fußmatte 10 ist durch die Fußmattenanordnung 8 fest mit der Boden-Verkleidung 12 verbunden. Die Haken 32 des zweiten Klettelements 20 greifen in die Schlaufen 34 des ersten Klettelements 18 ein, wobei das erste Klettelement 18 durch die verrasteten Rastarme 44, 46, 48, 50 und die Konterplatte 38 an der Boden-Verkleidung 12 fest verankert ist. Dadurch ist die Fußmatte 10 an der Boden-Verkleidung 12 rutschsicher befestigt. Der erste Rastarm 44 weist, wie zuvor erwähnt, den ersten Rastabschnitt 52, der zweite Rastarm 46 den zweiten Rastabschnitt 54, der dritte Rastarm 48 den dritten Rastabschnitt 56 und der vierte Rastarm 50 den vierten Rastabschnitt 58 auf, wobei die Rastabschnitte 52, 54, 56 und 58 zum Verrasten der Rastarme 44, 46, 48 und 50 aneinander anliegen bzw. sich die Rastarme 44, 46, 48, 50 hintergreifen.

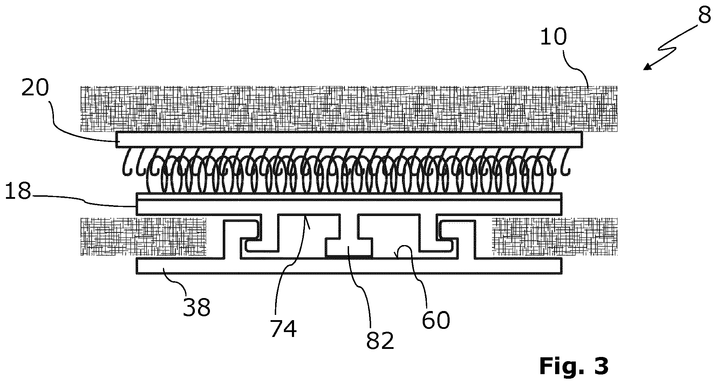

**Fig.** 3 zeigt schematisch eine Schnittansicht durch eine dritte Ausführungsform einer Fußmattenanordnung 8, bei der an der Unterseite 74 des ersten Klettelements 18 ein Stützvorsprung **82** ausgebildet ist. Der Stützvorsprung 82 ist hier in Form eines kopfüber stehenden "T" ausgebildet, wobei der Stützvorsprung 82 aus der Unterseite 74 des ersten Klettelements 18, insbesondere senkrecht, herausragt. Der Stützvorsprung 82 liegt flächig an der Oberseite 60 der Konterplatte 38 an, um das erste Klettelement 18 in der Fußmattenanordnung 8 zu stabilisieren.

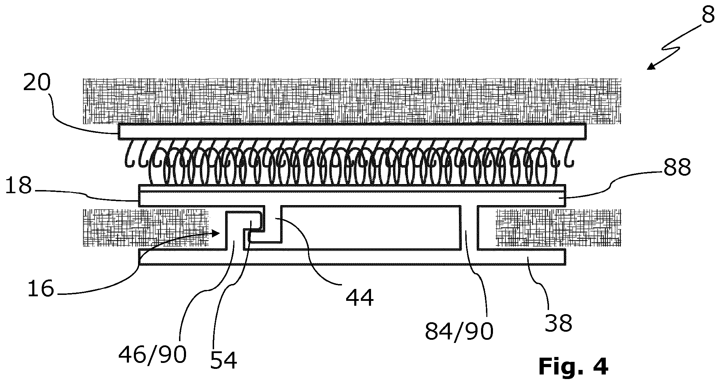

**Fig. 4** zeigt schematisch eine Schnittansicht durch eine vierte Ausführungsform einer Fußmattenanordnung 8, bei der das erste Klettelement 18 gemäß einer Ausführungsform ausgebildet ist, in der das erste Klettelement 18 lediglich den ersten Rastarm 44 aufweist. Die Konterplatte 38 ist in einer Ausführungsform ausgebildet, in der der die Konterplatte 38 lediglich den zweiten Rastarm 46 aufweist. Die Rastarme 44, 46 greifen ineinander und sind miteinander verrastet. Weiterhin erstreckt sich von dem ersten Klettelement 18 zu der Konterplatte 38 ein Filmscharnier **84,** welches das erste Klettelement 18 und die Konterplatte 38 stoffschlüssig verbindet. Vorzugsweise sind Konterplatte 38 und Basisplatte 88 einstückig mit dem Filmscharnier 84 ausgebildet. Dadurch sind das erste Klettelement 18 und die Konterplatte 38 besonders leicht montierbar.

Beispielhaft sind in der gezeigten Ausführungsform der Rastabschnitt 54 des Rastarms 46 und das Filmscharnier 84 elastisch ausgebildet. Die elastische Verbindungseinrichtung 90 des Verbindungssystems 16 weist dann den Rastarm 46 mit dem elastischen Rastabschnitt 54 und das Filmscharnier 84 auf.

**Fig. 5a** zeigt schematisch eine Schnittansicht durch eine weitere Anordnung eines ersten Klettelements 18, einer Konterplatte 38 und einer Boden-Verkleidung 12, wobei das erste Klettelement 18 an die Konterplatte 38 und die Boden-Verkleidung 12 herangeführt wird, um mit der Konterplatte 38 verrastet zu werden. Die Konterplatte 38 ist auf der Oberseite 28 der Boden-Verkleidung 12 befestigt, insbesondere durch Stoffschluss, z.B. mit Klebstoff oder einer Schweißverbindung. Von der Unterseite 74 der Basisplatte 88 des ersten Klettelements 18 stehen ein erster und ein dritter Rastarm 44, 48 ab. Von der Oberseite 60 der Konterplatte 38 stehen entsprechend ein zweiter und ein vierter Rastarm 46, 50 ab. An der Basisplatte 88 ist vorzugsweise das Schlaufenband 89 mit den Schlaufen 34 des ersten Klettelements 18 angeklebt und/oder angeschweißt.

**Fig. 5b** zeigt schematisch eine Schnittansicht durch eine fünfte Ausführungsform der Fußmattenanordnung 8. Die Fußmattenanordnung 8 weist eine Fußmatte 10 und die Boden-Verkleidung 12 auf. Zu der Fußmattenanordnung 8 gehört das erste Klettelement 18 mit der Basisplatte 88 und der Konterplatte 38 an der Oberseite 28 der Boden-Verkleidung 12. Die Basisplatte 88 und die Konterplatte 38 sind durch eine Verbindungseinrichtung 90 in Form der verrasteten Rastarme 44, 46, 48, 50 miteinander verbunden. Ferner weist die Fußmattenanordnung 8 das zweite Klettelement 20 auf, das an der Unterseite 22 der Fußmatte 10 befestigt ist.

**Fig. 5c** zeigt schematisch eine Schnittansicht durch die fünfte Ausführungsform der Fußmattenanordnung 8, wobei das erste Klettelement 18 und das zweite Klettelement 20 eine Klettverbindung 36 ausbilden. Die Fußmatte 10 ist durch die Fußmattenanordnung 8 fest mit der Boden-Verkleidung 12 verbunden. Die Haken 32 des zweiten Klettelements 20 greifen in die Schlaufen 34 des ersten Klettelements 18 ein. Das erste Klettelement 18 ist durch die verrasteten Rastarme 44, 46, 48, 50 und die Konterplatte 38 an der Oberseite 28 der Boden-Verkleidung 12 fest verankert. Die Konterplatte 18 ist durch einen Stoffschluss fest mit der Boden-Verkleidung 12 verbunden. Dadurch ist die Fußmatte 10 an der Boden-Verkleidung 12 rutschsicher befestigt.

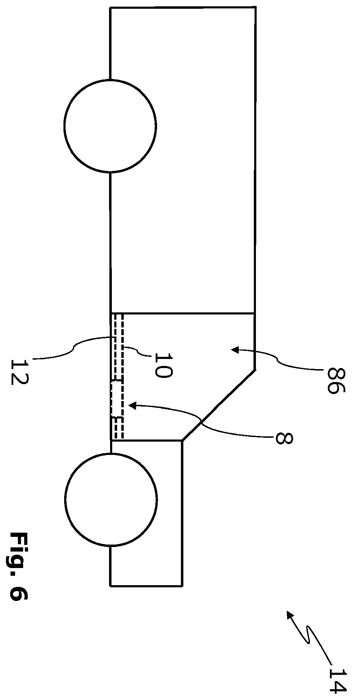

**Fig. 6** zeigt schematisch eine Seitenansicht eines Fahrzeugs 14 mit einer erfindungsgemäßen Fußmattenanordnung 8 gemäß einer der vorgenannten Ausführungsformen. Die Fußmattenanordnung 8 mit der im Fahrzeug 14 fest angeordneten Boden-Verkleidung 12 und der Fußmatte 10 in einem Fahrerraum **86** sind in der Fig. 6 gestrichelt dargestellt.

Unter Vornahme einer Zusammenschau aller Figuren der Zeichnung betrifft die Erfindung zusammenfassend eine Fußmattenanordnung 8 mit einer Bodenmatte 12. Ein erstes Klettelement 18 ist durch einen Formschluss, Materialschluss und/oder Kraftschluss an der Boden-Verkleidung 12 befestigt. Die Fußmattenanordnung 8 weist darüber hinaus eine Fußmatte 10 und ein zweites Klettelement 20 auf, wobei das zweite Klettelement 20 wenigstens teilweise an einer Unterseite 22 der Fußmatte 10 fixiert ist. Das erste Klettelement 18 und das zweite Klettelement 20 bilden eine Klettverbindung 36 aus. Zumindest die Boden-Verkleidung 12, das erste Klettelement 18, die Fußmatte 10 und das zweite Klettelement 20 bestehen aus dem gleichen Monomaterial.

### Bezugszeichenliste

- 8: Fußmattenanordnung
- 10: Fußmatte
- 12: Boden-Verkleidung
- 14: Fahrzeug
- 16: Verbindungssystem
- 18: erstes Klettelement
- 20: zweites Klettelement
- 22: Unterseite der Fußmatte
- 24: Durchgriffsöffnung
- 28: Oberseite der Boden-Verkleidung
- 30: Unterseite der Boden-Verkleidung
- 32: Haken
- 34: Schlaufen
- 35: Hakenband
- 36: Klettverbindung
- 38: Konterplatte
- 40: erstes Rastelement
- 42: zweites Rastelement
- 44: erster Rastarm
- 46: zweiter Rastarm
- 48: dritter Rastarm
- 50: vierter Rastarm
- 52: erster Rastabschnitt
- 54: zweiter Rastabschnitt
- 56: dritter Rastabschnitt
- 58: vierter Rastabschnitt
- 60: Oberseite der Konterplatte
- 62: Stamm des zweiten Rastarms
- 64: Stamm des vierten Rastarms
- 66: Durchgriffsöffnung
- 68: Durchgriffsöffnung
- 70: Kante des Rastabschnitts
- 72: Kante des Rastabschnitts
- 74: Unterseite des ersten Klettelements
- 76: Stamm des ersten Rastarms
- 78: Stamm des zweiten Rastarms
- 82: Stützvorsprung
- 84: Filmscharnier
- 86: Fahrerraum
- 88: Basisplatte des ersten Klettelements
- 89: Schlaufenband
- 90: Verbindungseinrichtung
- 92: Verbindungssteg
- 94: Lärmschutz

## Patentansprüche

1. Fußmattenanordnung (8) für ein Fahrzeug (14), wobei die Fußmattenanordnung (8) Folgendes aufweist:
- eine Boden-Verkleidung (12);
- ein erstes Klettelement (18), das mit der Boden-Verkleidung (12) verbunden ist;
- eine Fußmatte (10);
- ein zweites Klettelement (20), das wenigstens teilweise an einer Unterseite (22) der Fußmatte (10) angeordnet ist;
wobei das zweite Klettelement (20) mit dem ersten Klettelement (18) durch eine Klettverbindung (36) verbunden ist,
**dadurch gekennzeichnet,**
**dass** die Boden-Verkleidung (12), das erste Klettelement (18), die Fußmatte (10) und das zweite Klettelement (20) aus dem gleichen Monomaterial ausgebildet sind.

2. Fußmattenanordnung nach Anspruch 1, bei der das Monomaterial als ein Polyester, insbesondere ein Polylactid, ein Polypropylen oder als ein Polyamid ausgebildet ist.

3. Fußmattenanordnung nach einem der vorhergehenden Ansprüche,
wobei das erste Klettelement (18) eine Basisplatte (88) aufweist,
wobei eine Konterplatte (38) der Fußmattenanordnung (8) wenigstens teilweise an der Boden-Verkleidung (12) angeordnet ist,
wobei ein Verbindungssystem (16) die Basisplatte (88) und die Konterplatte (38) miteinander verbindet,
wobei das Verbindungssystem (16) eine elastische Verbindungseinrichtung (90) aufweist,
wobei sich die Verbindungseinrichtung (90) zwischen einander zugewandten, insbesondere parallel zueinander verlaufenden, Seiten (60, 74) der Basisplatte (88) und der Konterplatte (38) erstreckt.

4. Fußmattenanordnung nach Anspruch 3, wobei die Basisplatte (88) ein erstes Rastelement (40) mit einem ersten Rastabschnitt (52) aufweist und die Konterplatte (38) ein zweites Rastelement (42) mit einem zweiten Rastabschnitt (54) aufweist, wobei die elastische Verbindungseinrichtung (90) wenigstens eines der Rastelemente (40, 42) aufweist, wobei der Rastabschnitt (52, 54) des Rastelements (40, 42) der elastischen Verbindungseinrichtung (90) elastisch verschwenkbar und/oder verformbar ist, wobei das erste Rastelement (40) und das zweite Rastelement (42) unter Anlage des ersten Rastabschnitts (52) an dem zweiten Rastabschnitt (54) miteinander verrastet sind.

5. Fußmattenanordnung nach Anspruch 4, bei der das erste Rastelement (40) zusammen mit der Basisplatte (88) des ersten Klettelements (18) und/oder das zweite Rastelement (42) zusammen mit der Konterplatte (38) ein Extrusionsprofil mit dem jeweiligen Rastabschnitt (52, 54) aufweist, insbesondere in Form eines Extrusionsprofils ausgebildet ist.

6. Fußmattenanordnung nach Anspruch 4 oder 5, bei der das erste Rastelement (40) von einer Oberfläche des ersten Klettelements (18) in Richtung der Konterplatte (38) absteht und/oder das zweite Rastelement (42) von einer Oberfläche der Konterplatte (38) in Richtung des ersten Klettelements (18) absteht.

7. Fußmattenanordnung nach einem der Ansprüche 4 bis 6, bei der das erste Rastelement (40) und/oder das zweite Rastelement (42) einen Rastarm (44, 46, 48, 50) aufweist/aufweisen, wobei der jeweilige Rastarm (44, 46, 48, 50) einen Stamm (62, 64, 76, 78) aufweist, von dem der jeweilige Rastabschnitt (52, 54, 56, 58) absteht.

8. Fußmattenanordnung nach Anspruch 7, wobei das jeweilige Rastelement (40, 42) mehrere Rastarme (44, 46, 48, 50) aufweist, insbesondere zwei Rastarme (44, 46, 48, 50).

9. Fußmattenanordnung nach Anspruch 7 oder 8, wobei der Rastabschnitt (52, 54, 56, 58) des ersten Rastelementes (40) parallel zu einer Seitenfläche (74) des ersten Klettelements (18) verläuft und/oder der Rastabschnitt (52, 54, 56, 58) des zweiten Rastelements (42) parallel zu einer Seitenfläche (60) der Konterplatte (38) verläuft, wobei der Rastarm (44, 46, 48, 50) von der jeweiligen Seitenfläche (60, 74) absteht.

10. Fußmattenanordnung nach einem der Ansprüche 7 bis 9, bei der an dem jeweiligen Rastarm (44, 46, 48, 50) mehrere, insbesondere einander gegenüberliegende, Rastabschnitte (52, 54, 56, 58) ausgebildet sind.

11. Fußmattenanordnung nach einem der vorhergehenden Ansprüche,
bei der die Boden-Verkleidung (12) eine Durchgriffsöffnung (24, 66, 68) aufweist,
die Basisplatte (88) wenigstens teilweise an einer Oberseite (28) der Boden-Verkleidung (12) angeordnet ist,
die Konterplatte (38) wenigstens teilweise an einer Unterseite (30) der Boden-Verkleidung (12) angeordnet ist,
wobei die Unterseite (30) der Boden-Verkleidung (12) der Oberseite (28) der Boden-Verkleidung (12) gegenüberliegt,
wobei das zweite Klettelement (20) wenigstens teilweise an einer Unterseite (22) der Fußmatte (10) angeordnet ist,
wobei das Verbindungssystem (16) die Durchgriffsöffnung (24, 66, 68) durchgreift.

12. Fußmattenanordnung nach Anspruch 11 und einem der Ansprüche 4 bis 10, wobei das wenigstes eine Rastelement (40, 42) der elastischen Verbindungseinrichtung (90) in die Durchgriffsöffnung (24, 66, 68) eingeführt ist.

13. Fußmattenanordnung nach Anspruch 3 und einem der Ansprüche 1 bis 12, wobei die Konterplatte (38) wenigstens teilweise an der Oberseite (28) der Boden-Verkleidung (12) stoffschlüssig befestigt ist, insbesondere durch Klebstoff.

14. Fußmattenanordnung nach Anspruch 13, wobei die Verbindungseinrichtung (90) wenigstens teilweise zwischen der Oberseite (28) der Boden-Verkleidung (12) und der Unterseite (22) der Fußmatte (10) ausgebildet ist.

15. Fußmattenanordnung nach einem der Ansprüche 3 bis 14, bei der die elastische Verbindungseinrichtung (90) ein elastisches Filmscharnier (84) aufweist, wobei das elastische Filmscharnier (84) insbesondere die Konterplatte (38) und die Basisplatte (88) miteinander verbindet.

16. Fußmattenanordnung nach einem der Ansprüche 3 bis 15, bei der die Konterplatte (38) und/oder das erste Klettelement (18) einen Stützvorsprung (82) aufweist, der von der jeweiligen Oberfläche (60, 74) der Konterplatte (38) oder des ersten Klettelements (18) absteht.

17. Fußmattenanordnung nach Anspruch 3 und einem der vorhergehenden Ansprüche, bei der die Konterplatte (38) mit einem Lärmschutz (94) ausgebildet ist.

18. Fahrzeug (14) mit einer Fußmattenanordnung (8) nach einem der Ansprüche 1 bis 17.

19. Verfahren zur Herstellung einer Fußmattenanordnung (8) für ein Fahrzeug (14), wobei die Fußmattenanordnung (8) Folgendes aufweist:
- eine Boden-Verkleidung (24, 66, 68);
- ein erstes Klettelement (18), das mit der Boden-Verkleidung (12) verbunden ist;
- eine Fußmatte (10);
- ein zweites Klettelement (20), das wenigstens teilweise an einer Unterseite (22) der Fußmatte (10) angeordnet ist;
wobei das zweite Klettelement (20) mit dem ersten Klettelement (18) durch eine Klettverbindung (36) verbindbar ist,
**dadurch gekennzeichnet, dass**
die Boden-Verkleidung (12), das erste Klettelement (18), die Fußmatte (10) und das zweite Klettelement (20) aus dem gleichen Monomaterial ausgebildet sind,
aufweisend den Schritt:
i. Verbinden des ersten Klettelements (18) und des zweiten Klettelements (20).

## Claims

1. Floor mat arrangement (8) for a vehicle (14), wherein the floor mat arrangement (8) comprises:
- a floor covering (12);
- a first hook-and-loop element (18) connected to the floor covering (12);
- a floor mat (10);
- a second hook-and-loop element (20) arranged at least partially on an underside (22) of the floor mat (10);
wherein the second hook-and-loop element (20) is connected to the first hook-and-loop element (18) by a hook-and-loop connection (36),
**characterized in that**
the floor covering (12), the first hook-and-loop element (18), the floor mat (10) and the second hook-and-loop element (20) are formed from the same monomaterial.

2. Floor mat arrangement according to claim 1, wherein the monomaterial is designed as a polyester, in particular a polylactide, a polypropylene or a polyamide.

3. Floor mat arrangement according to one of the preceding claims,
wherein the first hook-and-loop element (18) has a base plate (88),
wherein a counter plate (38) of the floor mat arrangement (8) is at least partially arranged on the floor covering (12),
wherein a connecting system (16) connects the base plate (88) and the counter plate (38) to each other,
wherein the connecting system (16) has an elastic connecting device (90),
wherein the connecting device (90) extends between sides (60, 74) of the base plate (88) and the counter plate (38) that face each other, in particular, run parallel to each other.

4. Floor mat arrangement according to claim 3, wherein the base plate (88) has a first locking element (40) with a first locking section (52) and the counter plate (38) has a second locking element (42) with a second locking section (54), wherein the elastic connecting device (90) has at least one of the locking elements (40, 42), wherein the locking section (52, 54) of the locking element (40, 42) of the elastic connecting device (90) is elastically pivotable and/or deformable, wherein the first locking element (40) and the second locking element (42) are locked together with the first locking section (52) abutting the second locking section (54).

5. Floor mat arrangement according to claim 4, wherein the first locking element (40) together with the base plate (88) of the first hook-and-loop element (18) and/or the second locking element (42) together with the counter plate (38) has an extrusion profile with the respective locking section (52, 54), in particular in the form of an extrusion profile.

6. Floor mat arrangement according to claim 4 or 5, wherein the first locking element (40) protrudes from a surface of the first hook-and-loop element (18) in the direction of the counter plate (38) and/or the second locking element (42) protrudes from a surface of the counter plate (38) in the direction of the first hook-and-loop element (18).

7. Floor mat arrangement according to one of claims 4 to 6, wherein the first locking element (40) and/or the second locking element (42) has/have a locking arm (44, 46, 48, 50), wherein the respective locking arm (44, 46, 48, 50) has a stem (62, 64, 76, 78) from which the respective locking section (52, 54, 56, 58) protrudes.

8. Floor mat arrangement according to claim 7, wherein the respective locking element (40, 42) has several locking arms (44, 46, 48, 50), in particular two locking arms (44, 46, 48, 50).

9. Floor mat arrangement according to claim 7 or 8, wherein the locking section (52, 54, 56, 58) of the first locking element (40) extends parallel to a side surface (74) of the first hook-and-loop element (18) and/or the locking section (52, 54, 56, 58) of the second locking element (42) runs parallel to a side surface (60) of the counter plate (38), wherein the locking arm (44, 46, 48, 50) protrudes from the respective side surface (60, 74).

10. Floor mat arrangement according to one of claims 7 to 9, wherein several, in particular mutually opposite, locking sections (52, 54, 56, 58) are formed on the respective locking arm (44, 46, 48, 50).

11. Floor mat arrangement according to one of the preceding claims,
wherein the floor covering (12) has a passage opening (24, 66, 68),
the base plate (88) is arranged at least partially on an upper side (28) of the floor covering (12),
the counter plate (38) is arranged at least partially on an underside (30) of the floor covering (12),
wherein the underside (30) of the floor covering (12) is opposite the upper side (28) of the floor covering (12),
wherein the second hook-and-loop element (20) is at least partially arranged on an underside (22) of the floor mat (10),
wherein the connecting system (16) passes through the passage opening (24, 66, 68).

12. Floor mat arrangement according to claim 11 and one of claims 4 to 10, wherein at least one locking element (40, 42) of the elastic connecting device (90) is inserted into the passage opening (24, 66, 68).

13. Floor mat arrangement according to claim 3 and one of claims 1 to 12, wherein the counter plate (38) is at least partially attached to the upper side (28) of the floor covering (12) by a material bond, in particular by adhesive.

14. Floor mat arrangement according to claim 13, wherein the connecting device (90) is at least partially formed between the upper side (28) of the floor covering (12) and the underside (22) of the floor mat (10).

15. Floor mat arrangement according to one of claims 3 to 14, wherein the elastic connecting device (90) has an elastic film hinge (84), wherein the elastic film hinge (84) in particular connects the counter plate (38) and the base plate (88) to each other.

16. Floor mat arrangement according to one of claims 3 to 15, wherein the counter plate (38) and/or the first hook-and-loop element (18) has a support projection (82) which protrudes from the respective surface (60, 74) of the counter plate (38) or the first hook-and-loop element (18).

17. Floor mat arrangement according to claim 3 and one of the preceding claims, wherein the counter plate (38) is formed with noise protection (94).

18. Vehicle (14) with a floor mat arrangement (8) according to one of claims 1 to 17.

19. Method for manufacturing a floor mat arrangement (8) for a vehicle (14), wherein the floor mat arrangement (8) comprises:
- a floor covering (24, 66, 68);
- a first hook-and-loop element (18) connected to the floor covering (12);
- a floor mat (10);
- a second hook-and-loop element (20) arranged at least partially on an underside (22) of the floor mat (10);
wherein the second hook-and-loop element (20) can be connected to the first hook-and-loop element (18) by means of a hook-and-loop connection (36),
**characterized in that** the floor covering (12), the first hook-and-loop element (18), the floor mat (10) and the second hook-and-loop element (20) are made of the same monomaterial,
comprising the step of:
i. connecting the first hook-and-loop element (18) and the second hook-and-loop element (20).

## Revendications

1. Ensemble formant paillasson (8) pour un véhicule (14), l'ensemble formant paillasson (8) comprenant :
- un revêtement de sol (12);
- un premier élément auto-agrippant (18) relié au revêtement de sol (12),
- un paillasson (10) ;
- un second élément auto-agrippant (20) agencé au moins partiellement au niveau d'une face inférieure (22) du paillasson (10) ;
le second élément auto-agrippant (20) étant relié au premier élément auto-agrippant (18) grâce à une liaison auto-agrippante (36),
**caractérisé en ce que**
le revêtement de sol (12), le premier élément auto-agrippant (18), le paillasson (10) et le second élément auto-agrippant (20) sont réalisés à partir du même mono-matériau.

2. Ensemble formant paillasson selon la revendication 1, dans lequel le mono-matériau est réalisé sous la forme d'un polyester, en particulier d'un polylactide, d'un polypropylène ou d'un polyamide.

3. Ensemble formant paillasson selon l'une quelconque des revendications précédentes,
le premier élément auto-agrippant (18) présentant une plaque de base (88),
une contre-plaque (38) de l'ensemble formant paillasson (8) étant agencée au moins partiellement au niveau du revêtement de sol (12),
un système de liaison (16) reliant la plaque de base (88) et la contre-plaque (38),
le système de liaison (16) présentant un dispositif de liaison élastique (90),
le dispositif de liaison (90) s'étendant entre des faces (60, 74) de la plaque de base (88) et de la contre-plaque (38) tournées l'une vers l'autre, en particulier parallèles l'une à l'autre.

4. Ensemble formant paillasson selon la revendication 3, dans lequel la plaque de base (88) présente un premier élément d'encliquetage (40) avec une première section d'encliquetage (52) et la contre-plaque (38) présente un second élément d'encliquetage (42) avec une seconde section d'encliquetage (54), le dispositif de liaison élastique (90) présentant au moins un des éléments d'encliquetage (40, 42), la section d'encliquetage (52, 54) de l'élément d'encliquetage (40, 42) du dispositif de liaison élastique (90) pouvant être pivotée et/ou déformée de manière élastique, le premier élément d'encliquetage (40) et le second élément d'encliquetage (42) étant encliquetés l'un avec l'autre du fait de la mise en place de la première section d'encliquetage (52) au niveau de la seconde section d'encliquetage (54).

5. Ensemble formant paillasson selon la revendication 4, dans lequel le premier élément d'encliquetage (40), conjointement avec la plaque de base (88) du premier élément auto-agrippant (18), et/ou le second élément d'encliquetage (42), conjointement avec la contre-plaque (38), présente(nt) un profilé d'extrusion comprenant la section d'encliquetage (52, 54) respective, en particulier est/sont réalisé(s) sous la forme d'un profilé d'extrusion.

6. Ensemble formant paillasson selon la revendication 4 ou 5, dans lequel le premier élément d'encliquetage (40) fait saillie par rapport à une surface du premier élément auto-agrippant (18) en direction de la contre-plaque (38) et/ou le second élément d'encliquetage (42) fait saillie par rapport à une surface de la contre-plaque (38) en direction du premier élément auto-agrippant (18).

7. Ensemble formant paillasson selon l'une quelconque des revendications 4 à 6, dans lequel le premier élément d'encliquetage (40) et/ou le second élément d'encliquetage (42) présente(nt) un bras d'encliquetage (44, 46, 48, 50), le bras d'encliquetage (44, 46, 48, 50) respectif présentant un tronc (62, 64, 76, 78) par rapport auquel la section d'encliquetage (52, 54, 56, 58) respective fait saillie.

8. Ensemble formant paillasson selon la revendication 7, dans lequel l'élément d'encliquetage (40, 42) respectif présente plusieurs bras d'encliquetage (44, 46, 48, 50), en particulier deux bras d'encliquetage (44, 46, 48, 50).

9. Ensemble formant paillasson selon la revendication 7 ou 8, dans lequel la section d'encliquetage (52, 54, 56, 58) du premier élément d'encliquetage (40) s'étend parallèlement à une surface latérale (74) du premier élément auto-agrippant (18) et/ou la section d'encliquetage (52, 54, 56, 58) du second élément d'encliquetage (42) s'étend parallèlement à une surface latérale (60) de la contre-plaque (38), le bras d'encliquetage (44, 46, 48, 50) faisant saillie par rapport à la surface latérale (60, 74) respective.

10. Ensemble formant paillasson selon l'une quelconque des revendications 7 à 9, dans lequel plusieurs sections d'encliquetage (52, 54, 56, 58), en particulier se faisant face, sont formées au niveau du bras d'encliquetage (44, 46, 48, 50) respectif.

11. Ensemble formant paillasson selon l'une quelconque des revendications précédentes,
dans lequel le revêtement de sol (12) présente une ouverture de passage (24, 66, 68), la plaque de base (88) est agencée au moins partiellement au niveau d'une face supérieure (28) du revêtement de sol (12),
la plaque de base (38) est agencée au moins partiellement au niveau d'une face inférieure (30) du revêtement de sol (12),
la face inférieure (30) du revêtement de sol (12) étant opposée à la face supérieure (28) du revêtement de sol (12),
le second élément auto-agrippant (20) étant agencé au moins partiellement au niveau d'une face inférieure (22) du paillasson (10),
le système de liaison (16) traversant l'ouverture de passage (24, 66, 68).

12. Ensemble formant paillasson selon la revendication 11 et l'une quelconque des revendications 4 à 10, dans lequel le au moins un élément d'encliquetage (40, 42) du dispositif de liaison élastique (90) est introduit dans l'ouverture de passage (24, 66, 68).

13. Ensemble formant paillasson selon la revendication 3 et l'une quelconque des revendications 1 à 12, dans lequel la contre-plaque (38) est fixée au moins partiellement, par complémentarité de matière, en particulier grâce à un adhésif, à la face supérieure (28) du revêtement de sol (12).

14. Ensemble formant paillasson selon la revendication 13, dans lequel le dispositif de liaison (90) est réalisé au moins partiellement entre la face supérieure (28) du revêtement de sol (12) et la face inférieure (22) du paillasson (10).

15. Ensemble formant paillasson selon l'une quelconque des revendications 3 à 14, dans lequel le dispositif de liaison élastique (90) présente une charnière à film élastique (84), la charnière à film élastique (84) reliant en particulier la contre-plaque (38) et la plaque de base (88).

16. Ensemble formant paillasson selon l'une quelconque des revendications 3 à 15, dans lequel la contre-plaque (38) et/ou le premier élément auto-agrippant (18) présente(nt) une saillie de soutien (82) qui fait saillie par rapport à la surface (60, 74) respective de la contre-plaque (38) ou du premier élément auto-agrippant (18).

17. Ensemble formant paillasson selon la revendication 3 et l'une quelconque des revendications précédentes, dans lequel la contre-plaque (38) est réalisée de manière à inclure une protection contre le bruit (94).

18. Véhicule (14) comprenant un ensemble formant paillasson (8) selon l'une quelconque des revendications 1 à 17.

19. Procédé de fabrication d'un ensemble formant paillasson (8) pour un véhicule (14), dans lequel l'ensemble formant paillasson (8) comprend :
- un revêtement de sol (24, 66, 68) ;
- un premier élément auto-agrippant (18) relié au revêtement de sol (12) ;
- un paillasson (10) ;
- un second élément auto-agrippant (20) agencé au moins partiellement au niveau d'une face inférieure (22) du paillasson (10) ;
le second élément auto-agrippant (20) étant relié au premier élément auto-agrippant (18) grâce à une liaison auto-agrippante (36),
**caractérisé en ce que**
le revêtement de sol (12), le premier élément auto-agrippant (18), le paillasson (10) et le second élément auto-agrippant (20) sont réalisés à partir du même mono-matériau, comprenant l'étape consistant à :
i. relier le premier élément auto-agrippant (18) et le second élément auto-agrippant (20).
